# EUROPÄISCHE PATENTSCHRIFT

(11) **EP 3 853 503 B1**
(45) Veröffentlichungstag und Bekanntmachung des Hinweises auf die Patenterteilung: **16.11.2022**
(21) Anmeldenummer: 19783970.7
(22) Anmeldetag: 02.09.2019
(51) Int. Cl.: F16H 61/04, F16H 61/70

(54) **VERFAHREN ZUM BETREIBEN EINER ANTRIEBSANORDNUNG EINES FAHRZEUGS MIT ZWEI GLEICHWERTIGEN FAHRTRICHTUNGEN SOWIE ANTRIEBSANORDNUNG**
METHOD FOR OPERATING A DRIVE ASSEMBLY OF A VEHICLE HAVING TWO EQUIVALENT DIRECTIONS OF TRAVEL, AND DRIVE ASSEMBLY
PROCÉDÉ DE FONCTIONNEMENT D'UN DISPOSITIF D'ENTRAÎNEMENT D'UN VÉHICULE AVEC DEUX DIRECTIONS DE ROULEMENT ÉQUIVALENTES, ET ENSEMBLE D'ENTRAÎNEMENT

(30) Priorität: 17.09.2018 DE 102018215778
(43) Veröffentlichungstag der Anmeldung: 28.07.2021
(73) Patentinhaber: ZF Friedrichshafen AG, 88046 Friedrichshafen (DE)
(72) Erfinder: FRITSCHLE, Ulrich, 88069 Tettnang (DE); WILKS, Eberhard, 4780 Schärding (AT)
(86) Internationale Anmeldenummer: PCT/EP2019/073313
(87) Internationale Veröffentlichungsnummer: WO 2020/057949

(56) Entgegenhaltungen:
- DE-A1-102011 009 912
- DE-A1-102016 209 897
- DE-A1-102016 212 369

## Beschreibung

Die Erfindung betrifft ein Verfahren zum Betreiben einer Antriebsanordnung eines Fahrzeugs mit zwei gleichwertigen Fahrtrichtungen nach dem Oberbegriff des Anspruches 1 und eine Antriebsanordnung nach Anspruch 14.

Insbesondere Schienenfahrzeuge weisen häufig zwei gleichwertige Fahrtrichtungen auf. Das heißt, dass sie in einer ersten Fahrtrichtung in den gleichen Geschwindigkeitsbereichen bzw. Gängen betrieben werden können wie in einer dazu entgegengesetzten zweiten Fahrtrichtung. Die erste Fahrtrichtung und die zweite Fahrrichtung können auch als Vorwärtsfahrtrichtung und Rückwärtsfahrtrichtung bezeichnet werden. Die zwei gleichwertigen Fahrtrichtungen werden beispielsweise dadurch bewirkt, dass im Antriebstrang zwischen einem Wechselgetriebe und einem Radsatzgetriebe ein Wendegetriebe angeordnet wird. Das Wendegetriebe kann auch in Form einer Wendegetriebestufe oder eines Wendesatzes gemeinsam mit dem Wechselgetriebe in einem gemeinsamen Getriebegehäuse angeordnet werden. Durch die im Wendegetriebe bewirkte Drehrichtungsumkehr können alle von dem Wechselgetriebe bereitgestellten Gänge in beiden Fahrtrichtungen genutzt werden.

Aus der DE 10 2012 216 224 A1 sind Getriebe und Antriebsanordnungen für ein Fahrzeug mit zwei gleichwertigen Fahrtrichtungen bekannt. Das Getriebe weist ein Automatgetriebe mit einer Mehrzahl von Planetenradsätzen und einen Wendesatz auf. Das Automatgetriebe dient dabei als Hauptgetriebe bzw. Wechselgetriebe und stellt eine Mehrzahl an Übersetzungsstufen, das heißt Gängen bereit. Der Wendesatz erfüllt die Funktion des Wendegetriebes, nämlich die Drehrichtungsumkehr. Der Wendesatz kann dabei beispielsweise in Planetenbauweise oder in Vorgelegebauweise ausgeführt sein. Der Wendesatz umfasst eine Schalteinheit mit zumindest einem formschlüssigen Schaltelement, mit dem in dem Wendesatz die Drehrichtung umgekehrt werden kann.

Um ein Fahrzeug mit einer derartigen Antriebsanordnung abzuschleppen oder in einem Segelbetrieb zu betreiben, muss der Antriebsmotor vom Antriebsstrang abgekoppelt werden. Im Segelbetrieb wird der Antriebsmotor während der Fahrt vom Antriebsstrang abgekoppelt und ausgeschaltet oder mit einer Leerlaufdrehzahl betrieben, um dadurch Kraftstoff zu sparen.

Zum Abkoppeln des Antriebsmotors bei der oben beschriebenen Antriebsanordnung wird der Antriebsstrang üblicherweise mittels des formschlüssigen Schaltelements in dem Wendesatz getrennt und zum Ausschalten des Segelbetriebs wieder verbunden. Getrennt bedeutet hierbei, dass der Kraftfluss unterbrochen ist. Um beim Ausschalten des Segelbetriebs zumindest annähernd ruckfreie Schaltungen zu erzielen, ist es erforderlich die Differenzdrehzahl an dem formschlüssigen Schaltelement beispielsweise durch eine gezielte Motoransteuerung auf ein enges Differenzdrehzahlfenster einzustellen. Kommt es beim Schließen des formschlüssigen Schaltelements zu einer Zahn-auf-Zahn-Stellung, so muss diese zum Teil in mehreren Versuchen aufgelöst werden, bevor der Antriebsstrang wieder verbunden werden kann.

Es ist die Aufgabe der vorliegenden Erfindung ein verbessertes Verfahren zum Betreiben einer derartigen Antriebsanordnung eines Fahrzeugs mit zwei gleichwertigen Fahrtrichtungen und eine entsprechende Antriebsanordnung zur Verfügung zu stellen.

Diese Aufgabe wird gelöst durch ein Verfahren mit den Merkmalen des Anspruchs 1 und eine Antriebsanordnung nach Anspruch 14. Vorteilhafte Ausführungen sind in den abhängigen Ansprüchen angegeben.

Demnach wird ein Verfahren zum Betreiben einer Antriebsanordnung eines Fahrzeugs mit zwei gleichwertigen Fahrtrichtungen in einem Segel- oder Abschleppbetrieb vorgeschlagen. Dabei weist die Antriebsanordnung ein Wechselgetriebe zur Realisierung verschiedener Übersetzungen und einen Wendesatz zur Drehrichtungsumkehr auf. Das Wechselgetriebe umfasst mehrere Planetenradsätze und mehrere Lastschaltelemente. Ein solches Wechselgetriebe wird auch Stufenautomatgetriebe genannt. Als Lastschaltelemente können reibschlüssige Kupplungen, insbesondere druckbetätigte Lamellenkupplungen verwendet werden.

Der Wendesatz umfasst mindestens eine formschlüssige Schalteinrichtung. Die formschlüssige Schalteinrichtung kann insbesondere eine Schiebemuffe umfassen, die in einer Axialrichtung verschiebbar angeordnet ist und eine Innen- oder eine Außenverzahnung aufweist, welche zum Umschalten der Drehrichtung wahlweise mit einer ersten oder einer zweiten Gegenverzahnungen in Eingriff gebracht wird. Die formschlüssige Schalteinrichtung kann beispielsweise nur zwei Schaltstellungen für die beiden Drehrichtungen bzw. Fahrtrichtungen aufweisen. In diesem Fall ist auch eine einfache Ansteuerung von nur zwei Schaltstellungen und ein einfacher Zweistellungszylinder als Aktuator ausreichend. Das Verfahren ist jedoch auch anwendbar bei Ausführungen der formschlüssigen Schalteinrichtung mit zumindest einer weiteren Schaltstellung, insbesondere einer Neutralstellung, in der der Kraftfluß unterbrochen ist.

Das vorgeschlagene Verfahren sieht vor, dass zum Einschalten des Segel- oder Abschleppbetriebs zumindest ein Lastschaltelement im Wechselgetriebe geöffnet wird. Durch das Öffnen des zumindest einen Lastschaltelements wird der Kraftfluß in der Antriebsanordnung unterbrochen. Mit anderen Worten wird das Wechselgetriebe dabei in eine Neutralstellung gebracht. Die formschlüssige Schalteinrichtung in dem Wendesatz muss zum Einschalten oder zum Ausschalten des Segel- oder Abschleppbetriebs nicht betätigt werden. Der Kraftfluß in der Antriebsanordnung kann also zum Segeln in dem Wechselgetriebe unterbrochen werden, während die formschlüssige Schalteinrichtung in dem Wendesatz in einer Vorwärtsfahrtstellung oder in der Rückwärtsfahrtstellung verbleibt.

Im realen Betrieb kommen Neutralschaltungen sehr häufig vor und führen zu zusätzlichem Verschleiß an verschiedenen Bauteilen, wenn die Neutralstellungen durch Schaltungen einer formschlüssigen Schalteinrichtung realisiert werden. Verschleiß tritt dabei insbesondere an Gleitflächen der Schiebemuffenverzahnung und deren Gegenverzahnungen, sowie zwischen der Schiebemuffe und einer Schaltgabel, zwischen einer Schaltschiene und einer Schaltschienenlagerung sowie an Kolbenabdichtung bzw. Zylinderlaufflächen von druckmittelbetätigten Kolben-ZylinderEinheiten auf. Die Lastschaltelemente im Schaltgetriebe, insbesondere Lamellenkupplungen, sind dagegen für hohe Schaltungszahlen mit minimalem Verschleiß ausgelegt. Das vorgeschlagene Verfahren führt daher vorteilhaft zu einer Reduzierung des Verschleißes in der formschlüssigen Schalteinrichtung.

Das vorgeschlagene Verfahren ist sowohl bei Antriebsanordnungen anwendbar, bei denen der Wendesatz zusammen mit dem Wechselgetriebe in einem gemeinsamen Gehäuse angeordnet ist als auch bei Antriebsanordnungen, bei denen der Wendesatz als ein separates Wendegetriebe im Antriebsstrang angeordnet ist.

Unter einem Segelbetrieb wird hier ein Betrieb verstanden, bei dem der Antriebsmotor während der Fahrt des Fahrzeugs von einem abtriebsseitigen Abschnitt des Antriebsstrangs abgekoppelt und ausgeschaltet wird, oder mit einer Leerlaufdrehzahl betrieben wird. Das Fahrzeug bewegt sich aufgrund seiner trägen Masse oder bei einer Fahrt im Gefälle weiter, obwohl der Antriebsmotor abgeschaltet sein kann. Unter dem Begriff Abschleppbetrieb fallen beispielsweise auch Rangierfahrten, bei denen das Fahrzeug von einem anderen, angetriebenen Fahrzeug, beispielsweise einer Rangierlokomotive bewegt wird.

Das Einschalten des Segelbetriebs bedeutet also der Wechsel von einem angetriebenen Fahrbetrieb in einen nicht angetriebenen Segelbetrieb. Der Segelbetrieb kann nach Erreichen einer gewünschten Fahrgeschwindigkeit selbsttätig von einer Steuereinrichtung eingeschaltet werden. Das Erreichen der gewünschten Fahrgeschwindigkeit kann beispielsweise durch das Erfassen der Stellung eines vom Fahrer des Fahrzeugs betätigbaren Fahrschalters oder Fahrpedals ermittelt werden. Die genannte Steuereinrichtung veranlaßt den Segelbetrieb beispielsweise, wenn der Fahrer den Traktionswunsch bzw. Beschleunigungswunsch auf den Wert Null reduziert.

Ein zu diesem Verfahren geeignetes Wechselgetriebe kann beispielsweise drei Planetenradsätze umfassen, wobei zum Einschalten des Segel- oder Abschleppbetriebs genau zwei Lastschaltelemente in dem Wechselgetriebe geöffnet werden. Derartige Wechselgetriebe haben sich bereits in Antriebsanordnungen für Fahrzeuge mit zwei gleichwertigen Fahrtrichtungen bewährt und bieten für eine ausreichende Anzahl an Übersetzungsstufen. In einem derartigen Wechselgetriebe werden zur Darstellung jeder Übersetzungsstufe beispielsweise genau zwei Lastschaltelemente geschlossen. Abhängig von welcher Übersetzungsstufe ausgehend der Segelbetrieb eingeschaltet wird, werden die dieser Übersetzungsstufe entsprechenden Lastschaltelemente geöffnet.

Zum Ausschalten eines Segel- oder Abschleppbetriebs wird zumindest ein Lastschaltelement im Wechselgetriebe geschlossen. Dies wird eingeleitet, sobald der Fahrer des Fahrzeugs während des Segelbetriebs beispielsweise über ein Fahrschalter oder ein Fahrpedal einen Beschleunigungswunsch eingibt. Es werden dann so viele Lastschaltelemente geschlossen, dass der Kraftfluß in der Antriebsanordnung wieder geschlossen ist und der Kraftfluß von einem Antriebsmotor über die Antriebsanordnung bis zu den Antriebsrädern des Fahrzeugs geleitet wird.

Auch das Ausschalten des Segel- oder Abschleppbetriebs kann vorteilhaft durch die genannte Steuereinrichtung veranlasst werden. Von der Steuereinrichtung können dazu vorzugsweise abhängig von der aktuellen Fahrgeschwindigkeit geeignete Lastschaltelemente in dem Wechselgetriebe ausgewählt und geschlossen werden. Die Auswahl der geeigneten Lastschaltelemente kann mithilfe von Parametern erfolgen, die in einem Speicher der Steuereinrichtung abgelegt sind. Die Parameter können insbesondere gemäß einem Schaltschema festgelegt sein, wobei in dem Schaltschema zu jeder Gangstufe bzw. Übersetzung des Wechselgetriebes jedem Schaltelement einen entsprechender Zustand "offen" oder "geschlossen" zugeordnet ist. Jeder Gangstufe ist zudem ein bestimmter Fahrgeschwindigkeitsbereich zugeordnet.

Im Vergleich zu den herkömmlichen Verfahren, bei denen ein Segelbetrieb durch Schließen eines formschlüssigen Schaltelements beendet wird, kann das Umschalten vom Segelbetrieb in den angetriebenen Fahrbetrieb mit dem vorgeschlagenen Verfahren schneller erfolgen, weil beim Schließen eines Lastschaltelements kein enges Differenzdrehzahlfenster eingestellt werden und keine Schiebemuffe einen großen Schaltweg zurücklegen muss. Verzögerungen durch die eingangs genannten Zahn-auf-Zahn-Stellungen beim Beenden des Segelbetriebs werden mit dem vorgeschlagenen Verfahren ganz vermieden.

Darüber hinaus kann das Umschalten vom Segelbetrieb in den angetriebenen Fahrbetrieb sanfter und damit komfortabler erfolgen, weil beim Schließen der Lastschaltelemente keine Stöße entstehen wie beim Schließen eines formschlüssigen Schaltelements. Erfolgt das Schließen bei einem formschlüssigen Schaltelement außerhalb eines zulässigen Differenzdrehzahlfensters, infolge von Synchronisierungsfehlern, so kommt es zum Ratschen bis die Schiebemuffe einspuren kann. Dies führt zu spürbaren Stößen im Fahrzeug. Werden dagegen die Lastschaltelemente, insbesondere die Lamellenkupplungen des Wechselgetriebes hierzu verwendet, tritt dieser Effekte nicht auf. Die Belastung der formschlüssigen Schalteinrichtung wird minimiert und Schaltstöße werden vermieden.

Die Erfindung führt generell zu einer Reduzierung des Bauteillastkollektivs, insbesondere jedoch in der formschlüssigen Schalteinrichtung des Wendesatzes. Im realen Betrieb kommen Neutralschaltungen sehr häufig vor und führen zu einer zusätzlichen Belastung für alle Bauteile, die Schaltkraft übertragen(Kolben, Schaltschiene, Schaltgabel, Befestigungselemente). Die Lastschaltelemente in dem Wechselgetriebe sind für die Bauteilbeanspruchung bei hohen Schaltungszahlen ausgelegt.

Bei der Auswahl, welche Lastschaltelemente zum Ausschalten des Segel- oder Abschleppbetriebs geschlossen werden, kann zusätzlich zur aktuellen Fahrgeschwindigkeit auch ein Beschleunigungswunsch berücksichtigt werden. Ein solcher Beschleunigungswunsch kann ebenfalls durch das Erfassen der Stellung eines vom Fahrer des Fahrzeugs betätigbaren Fahrschalters oder Fahrpedals ermittelt werden. Soll das Fahrzeug beispielsweise nach einer Segelphase stark beschleunigt werden, so kann in dem Wechselgetriebe zunächst ein kleinerer Gang mit einer höheren Übersetzung eingelegt werden. Dadurch kann ein als Verbrennungsmotor ausgeführte Antriebsmotor während einer Beschleunigungsphase in einem höheren Drehzahlbereich mit einer höheren Drehmomentabgabe betrieben werden.

Gemäß einer bevorzugten Ausführung des Verfahrens kann nun vorgesehen sein, dass der Antriebsmotor der Antriebsanordnung beim Schließen der ausgewählten Lastschaltelemente auf eine Zieldrehzahl geschleppt wird. Dies hat den Vorteil, dass das Ausschalten des Segelbetriebs ohne einen aktiven Motoreneingriff gesteuert werden kann. So kann beispielsweise die Segelfunktion in einem Getriebesteuergerät gesteuert werden, welches separat von einem Motorsteuergerät ausgebildet ist, wodurch der Aufwand für Schnittstellen zwischen mehreren Steuergeräten und der Steuerungsaufwand der gesamten Fahrzeugsteuerung verringert werden kann.

Gemäß einer alternativen Ausführung kann der Antriebsmotor der Antriebsanordnung jedoch auch vor dem Schließen der ausgewählten Lastschaltelemente auf eine Synchrondrehzahl beschleunigt werden. In diesem Fall wird die Funktion des Segelns also mit einem Motoreingriff realisiert. Dabei wird der Antriebsmotor so angesteuert, dass die Motordrehzahl bereits vor dem Schließen der ausgewählten Lastschaltelemente zumindest annähernd auf die Synchrondrehzahl erhöht wird. Die Synchrondrehzahl kann also auch einem relativ engen Differenzdrehzahlfenster entsprechen, wobei geringfügige Drehzahlabweichungen wiederum durch die Lastschaltelemente ausgeglichen werden.

Zwischen dem Antriebsmotor und dem Eingang zum Wechselgetriebe kann ein hydrodynamischer Drehmomentwandler mit einer Überbrückungskupplung angeordnet sein. Häufig ist ein solcher Drehmomentwandler eingangsseitig im Gehäuse des Wechselgetriebes angeordnet. Die genannte Überbrückungskupplung verbindet den Eingang mit dem Ausgang des Drehmomentwandlers, wenn die Überbrückungskupplung im Schliesssinne betätigt wird. Die Überbrückungskupplung wird während des Segelvorganges im Öffnungssinne betätigt und bleibt bei Beenden des Segelvorganges noch eine Zeitspanne geöffnet.

Ein weiterer Aspekt der Erfindung betrifft die Ölversorgung in dem Wechselgetriebe und dem Wendesatz. Eine zuverlässige Ölversorgung ist erforderlich für die Schmierung und Kühlung von Bauteilen und zur Druckmittelbetätigung der Schaltelemente. In der Regel verfügt ein Wechselgetriebe eines Fahrzeugs über eine von einer Eingangswelle antreibbare Ölversorgung, die im angetriebenen Fahrbetrieb alle Schmierstellen des Wechselgetriebes mit Schmieröl versorgt. Die von der Eingangswelle antreibbare Ölversorgung kann beispielsweise als Ölumlaufschmierung ausgeführt sein. Vorzugsweise ist die Ölversorgung als Druckschmiereinrichtung mit zumindest einer über die Antriebswelle antreibbaren Ölpumpe ausgeführt. Eine solche Ölpumpe kann entweder direkt von der Eingangswelle angetrieben werden oder über eine oder mehrere weitere Wellen des Wechselgetriebes. Im normalen Fahrbetrieb kann so beispielsweise eine Trockensumpfschmierung realisiert werden.

In einem Segel- oder Abschleppbetrieb werden jedoch die Eingangswelle, und damit die Ölpumpe nicht angetrieben. Die übliche Ölversorgung ist also außer Betrieb. Gemäß einer bevorzugten Ausführung des vorgeschlagenen Verfahrens wird mit dem Einschalten des Segel- oder Abschleppbetriebs daher eine Sekundärpumpe zur Ölversorgung zumindest des Wechselgetriebes eingeschaltet bzw. in Betrieb genommen. Eine Sekundärpumpe wird vom Abtrieb, das heißt von einer Ausgangswelle der Antriebsanordnung angetrieben. Damit wird sichergestellt, dass auch während des Segel- oder Abschleppbetriebs alle Bauteile der Antriebsanordnung ausreichend geschmiert und gekühlt werden, und dass jederzeit ein ausreichender Druck zur Betätigung der druckmittelbetätigten Schaltelemente bzw. Lastschaltelemente zur Verfügung steht.

Während des Segel- oder Abschleppbetriebs kann der Schmiermittelstand in dem Wechselgetriebe und/oder dem Wendesatz erhöht werden. Dies führt dazu, dass rotierende Getriebeelemente, insbesondere Zahnräder, in den Ölsumpf eintauchen und das Schmieröl so im Getriebegehäuse fördern bzw. verteilen, dass alle Schmierstellen ausreichend versorgt werden. Auf diese Weise kann eine Tauchschmierung realisiert werden, die nur während des Segel- oder Abschleppbetriebs arbeitet. Während des angetriebenen Fahrbetriebs sinkt der Ölmittelstand wieder ab und die rotierenden Getriebeelemente tauchen nicht mehr in den Ölsumpf ein. Dadurch werden Schleppverluste und Panschverluste vermieden.

Für die oben erwähnte Variante der Antriebsanordnung, bei der der Wendesatz eine formschlüssige Schalteinrichtung mit einer Neutralstellung umfasst, kann ein bevorzugtes Verfahren die folgenden Verfahrensschritte umfassten. Beim Einschalten des Segel- oder Abschleppbetriebs wird zuerst der Kraftfluss im Wechselgetriebe unterbrochen, indem zumindest ein Lastschaltelement geöffnet wird. Anschließend wird der Wendesatz in die Neutralstellung geschaltet. Danach kann der Kraftfluss im Wechselgetriebe während des Segel- oder Abschleppbetriebs wieder geschlossen werden, indem das zuvor geöffnete Lastschaltelement bzw. die Lastschaltelemente wieder geschlossen wird bzw. werden. Zum Ausschalten des Segel- oder Abschleppbetriebs werden zunächst alle Lastschaltelemente des Wechselgetriebes wieder geöffnet. Danach wird die formschlüssige Schalteinrichtung geschlossen und schließlich wird der Kraftfluß wieder geschlossen, in dem zumindest ein Lastschaltelement im Wechselgetriebe geschlossen wird. Auf diese Weise kann gegebenenfalls eine von der Eingangswelle angetriebene Ölpumpe in dem Wechselgetriebe während des Segel- oder Abschleppbetriebs genutzt werden und auf eine zusätzliche Sekundärpumpe kann verzichtet werden. Trotzdem bleibt der Vorteil des sanften und ruckfreien Ausschaltens des Segel- oder Abschleppbetriebs erhalten.

Für die oben erwähnte Variante der Antriebsanordnung, bei der der Wendesatz eine formschlüssige Schalteinrichtung mit nur zwei Schaltstellungen, also keine Neutralstellung umfasst, ist vorzugsweise vorgesehen, dass der Kraftfluss im Wechselgetriebe beim Segel oder Abschleppbetrieb dauernd unterbrochen bleibt.

Beim Umschalten des Wendegetriebes von einer Vorwärtsfahrtrichtung auf eine Rückwärtsfahrtrichtung wird der Kraftfluss vorzugsweise im Wechselgetriebe durch das Öffnen einer Kupplung unterbrochen.

Des Weiteren umfasst die Erfindung eine Antriebsanordnung für ein Fahrzeug mit zwei gleichwertigen Fahrtrichtungen, wobei die Antriebsanordnung ein Wechselgetriebe zur Realisierung verschiedener Übersetzungen und einen Wendesatz zur Drehrichtungsumkehr umfasst. Das Wechselgetriebe umfasst dabei mehrere Planetenradsätze und mehrere Lastschaltelemente. Der Wendesatz umfasst mindestens eine formschlüssige Schalteinrichtung. Erfindungsgemäß umfasst die Antriebsanordnung ferner eine Steuereinrichtung, die dazu eingerichtet ist das oben beschriebene Verfahren zu steuern.

Schließlich umfasst die Erfindung ein Computerprogrammprodukt mit Befehlen, die bewirken, dass die genannte Steuereinrichtung Verfahrensschritte gemäß dem oben beschriebenen Verfahren ausführt.

Im Folgenden wird die Erfindung anhand des in der nachfolgenden Figur abgebildeten Ausführungsbeispiels näher erläutert.

Dabei zeigen die
- Fig. 1: eine schematische Darstellung einer Ausführungsform einer erfindungsgemäßen Antriebsanordnung in einem Antriebsstrang eines Fahrzeugs und
- Fig. 2: die Schritte eines erfindungsgemäßen Verfahrens in schematischer Darstellung.

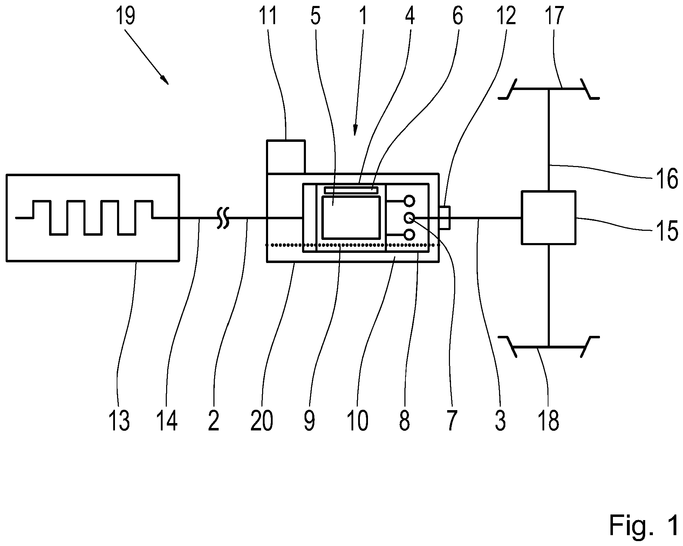

Der in der Fig. 1 dargestellte Antriebsstrang 19 eines Fahrzeugs mit zwei gleichwertigen Fahrtrichtungen umfasst eine Antriebsanordnung 1 mit einem Wechselgetriebe 4 zur Realisierung verschiedener Übersetzungen und einem Wendesatz 8 zur Drehrichtungsumkehr. Der Antriebsstrang 19 kann durch einen Antriebsmotor 13 über eine Motorabtriebswelle 14 angetrieben werden. Der Antriebsmotor 13 ist ein Verbrennungsmotor. Die Motorabtriebswelle 14 kann beispielsweise einteilig mit der Kurbelwelle des Antriebsmotors 13 ausgebildet sein. Die Motorabtriebswelle 14 ist antriebswirksam mit einer Antriebswelle 2 der Antriebsanordnung 1 verbunden. Das Wechselgetriebe 4 ist als Stufenautomatgetriebe ausgeführt und weist mehrere Planetenradsätze 5 sowie mehrere Lastschaltelemente 6 in Form von Lamellenkupplungen auf. Die Mehrzahl der Planetenradsätze 5 und der Lastschaltelemente 6 sind in der Fig. 1 jeweils vereinfacht als ein Kästchen dargestellt. Der Wendesatz 8 umfasst eine formschlüssige Schalteinrichtung 7. Das Wechselgetriebe 4 ist zusammen mit dem Wendesatz 8 in einem gemeinsamen Getriebegehäuse 20 angeordnet.

Die Antriebsanordnung 1 umfasst ferner eine Ölversorgung zur Bereitstellung von Öldruck für druckmittelbetätigten Lastschaltelemente 6 und die ebenfalls druckmittelbetätigte formschlüssige Schalteinrichtung 7. Die Ölversorgung stellt außerdem die Schmierung und Kühlung der Bauteile in dem gemeinsamen Getriebegehäuse 20 sicher. In dem gemeinsamen Getriebegehäuse 20 ist ein Ölsumpf 10 mit einem Ölpegel bzw. Schmiermittelstand 9 ausgebildet. Zur Ölversorgung zählt auch eine Sekundärpumpe 12, die an einer Abtriebswelle 3 der Antriebsanordnung 1 angeordnet ist und von dieser angetrieben wird. Die Sekundärpumpe 12 wird mit dem Einschalten des Segel- oder Abschleppbetriebs in Betrieb genommen.

Eine Abtriebswelle 3 der Antriebsanordnung 1 treibt über ein Achsgetriebe 15 eine Radachse 16 des Fahrzeugs, vorliegend eines Schienenfahrzeugs an. Auf der Radachse 16 sind zwei Antriebsräder in Form von Schienenrädern 17 und 18 befestigt, mit denen das Schienenfahrzeug auf Schienen rollt und angetrieben wird.

Das erfindungsgemäße Verfahren kann durch eine Steuereinrichtung 11 gesteuert werden. Die wesentlichen Elemente der Steuereinrichtung 11 sind in Form eines Steuergeräts an dem Getriebegehäuse 20 angeordnet. Die Steuereinrichtung 11 umfasst Hardware und Software zur Steuerung der Antriebsanordnung 1. Die Steuereinrichtung 11 umfasst zumindest einen Prozessor und zumindest einen Datenspeicher, sowie Schnittstelle zur Verbindung der Steuereinrichtung 11 mit weiteren Steuergeräten des Fahrzeugs. In dem Datenspeicher sind Computerprogramme bzw. ein Computerprogrammprodukt abgelegt, die bewirken, dass die Steuereinrichtung 11 die Verfahrensschritte des beschriebenen Verfahrens ausführt.

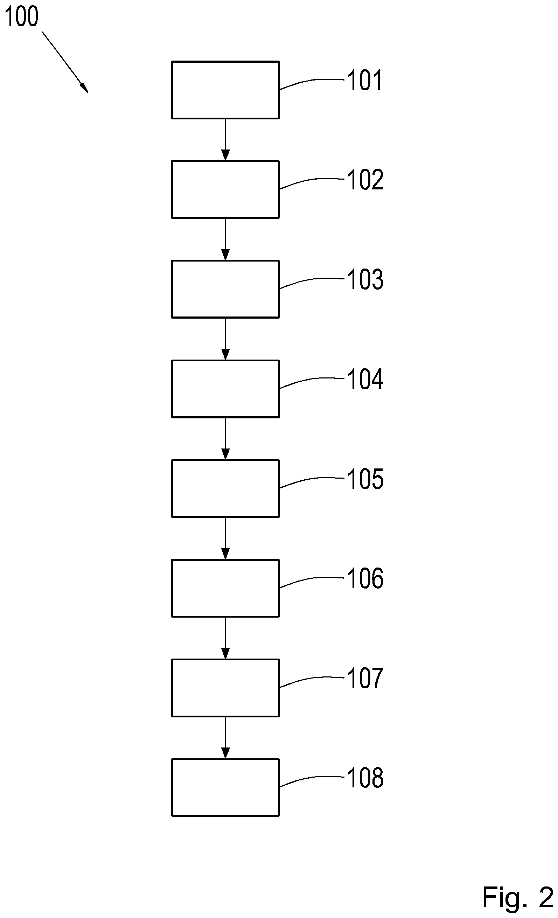

In der Fig. 2 sind einige Verfahrensschritte einer Ausführung eines erfindungsgemäßen Verfahrens 100 dargestellt, die das Ein- und Ausschalten einer Segelbetriebs umfassen. Eingeleitet und gesteuert werden die beschriebenen Verfahrensschritte von der Steuereinrichtung 11.

Im Verfahrensschritt 101 wird von der Steuereinrichtung 11 anhand der Stellung eines Fahrschalters erkannt, dass der Fahrer den Traktionswunsch, d.h. die gewünschte Beschleunigung des Fahrzeugs, während der Fahrt auf den Wert Null reduziert hat.

Daraufhin wird im Verfahrensschritt 102 die Drehmomentanforderung an den Antriebsmotor reduziert, um am Antriebsmotor eine Leerlaufdrehzahl einzustellen. Danach werden im Wechselgetriebe in einem weiteren Verfahrensschritt 103 die Lastschaltelemente geöffnet, sodass der Kraftfluß im Wechselgetriebe unterbrochen ist.

Somit ist der Segelbetrieb aktiv eingestellt. Die formschlüssige Schalteinrichtung des Wendesatzes bleibt dabei in der vorliegenden Schaltstellung verriegelt.

Im Verfahrensschritt 104 bleibt der Segelbetrieb eingestellt, bis die Steuereinrichtung anhand der Stellung des Fahrschalters im Verfahrensschritt 105 erkennt, dass der Fahrer den Traktionswunsch erhöht auf einen Wert größer als Null.

Daraufhin werden von der Steuereinrichtung im Verfahrensschritt 106 die der aktuellen Fahrgeschwindigkeit entsprechende Übersetzung und die entsprechenden Lastschaltkupplungen im Wechselgetriebe ausgewählt und geschlossen, während der Antriebsmotor weiter mit einer Leerlaufdrehzahl betrieben wird. Dazu sendet die Steuereinrichtung einer Motorsteuerung ein Signal für eine Drehmomentbegrenzung am Antriebsmotor, sodass der Antriebsmotor weiter mit Leerlaufdrehzahl betrieben wird.

Im folgenden Verfahrensschritt 107 wird der Antriebsmotor über das Wechselgetriebe auf eine Zieldrehzahl geschleppt. Nach Erreichen der Zieldrehzahl wird die Drehmomentbegrenzung des Antriebsmotors im Verfahrensschritt 108 freigegeben, sodass der Antriebsmotor das Fahrzeug wieder über den geschlossenen Antriebsstrang antreiben kann.

### Bezugszeichen

- 1: Antriebsanordnung
- 2: Antriebswelle
- 3: Abtriebswelle
- 4: Wechselgetriebe
- 5: Planetenradsätze
- 6: Lastschaltelemente
- 7: formschlüssige Schalteinrichtung
- 8: Wendesatz
- 9: Schmiermittelstand
- 10: Ölsumpf
- 11: Steuereinrichtung
- 12: Sekundärpumpe
- 13: Antriebsmotor
- 14: Motorabtriebswelle
- 15: Achsgetriebe
- 16: Radachse
- 17: Schienenrad
- 18: Schienenrad
- 19: Antriebsstrang
- 20: Getriebegehäuse

- 100: Verfahren

- 101 - 108: Verfahrensschritte

## Patentansprüche

1. Verfahren zum Betreiben einer Antriebsanordnung (1) eines Fahrzeugs mit zwei gleichwertigen Fahrtrichtungen in einem Segel- oder Abschleppbetrieb, wobei die Antriebsanordnung (1) ein Wechselgetriebe (4) zur Realisierung verschiedener Übersetzungen und einen Wendesatz (8) zur Drehrichtungsumkehr aufweist, wobei das Wechselgetriebe (4) mehrere Planetenradsätze (5) und mehrere Lastschaltelemente (6) umfasst, und wobei der Wendesatz (8) mindestens eine formschlüssige Schalteinrichtung (7) umfasst, **dadurch gekennzeichnet, dass** zum Einschalten des Segel- oder Abschleppbetriebs zumindest ein Lastschaltelement (6) im Wechselgetriebe (4) geöffnet wird.

2. Verfahren nach Anspruch 1, **dadurch gekennzeichnet, dass** der Segelbetrieb nach Erreichen einer gewünschten Fahrgeschwindigkeit selbsttätig von einer Steuereinrichtung (11) eingeschaltet wird.

3. Verfahren nach Anspruch 1 oder 2, **dadurch gekennzeichnet, dass** das Wechselgetriebe (4) drei Planetenradsätze (5) umfasst, und dass zum Einschalten des Segel- oder Abschleppbetriebs genau zwei Lastschaltelemente (6) im Wechselgetriebe (4) geöffnet werden.

4. Verfahren nach einem der vorgenannten Ansprüche, **dadurch gekennzeichnet, dass** zum Ausschalten eines Segel- oder Abschleppbetriebs zumindest ein Lastschaltelement (6) im Wechselgetriebe (4) geschlossen wird.

5. Verfahren nach Anspruch 4, **dadurch gekennzeichnet, dass** abhängig von der aktuellen Fahrgeschwindigkeit geeignete Lastschaltelemente (6) ausgewählt und geschlossen werden.

6. Verfahren nach Anspruch 4 oder 5, **dadurch gekennzeichnet, dass** bei dem Schließen der ausgewählten Lastschaltelemente (6) ein Antriebsmotor (13) der Antriebsanordnung (1) auf eine Zieldrehzahl geschleppt wird.

7. Verfahren nach Anspruch 4 oder 5, **dadurch gekennzeichnet, dass** vor dem Schließen der ausgewählten Lastschaltelemente (6) ein Antriebsmotor (13) der Antriebsanordnung (1) auf eine Synchrondrehzahl beschleunigt wird.

8. Verfahren nach einem der vorgenannten Ansprüche, **dadurch gekennzeichnet, dass** die formschlüssige Schalteinrichtung (7) zum Einschalten oder zum Ausschalten des Segel- oder Abschleppbetriebs nicht betätigt wird.

9. Verfahren nach einem der vorgenannten Ansprüche, **dadurch gekennzeichnet, dass** mit dem Einschalten des Segel- oder Abschleppbetriebs eine Sekundärpumpe (12) zur Ölversorgung zumindest des Wechselgetriebes (4) eingeschaltet bzw. in Betrieb genommen wird.

10. Verfahren nach einem der vorgenannten Ansprüche, **dadurch gekennzeichnet, dass** der Schmiermittelstand (9) beim Segel- oder Abschleppbetrieb im Wechselgetriebe (4) erhöht wird.

11. Verfahren nach einem der vorgenannten Ansprüche, **dadurch gekennzeichnet, dass** zuerst der Kraftfluss im Wechselgetriebe (4) unterbrochen wird, indem zumindest ein Lastschaltelement (6) geöffnet wird und anschließend die formschlüssige Schalteinrichtung (7) des Wendesatzes (8) in eine Neutralstellung geschaltet wird und dann der Kraftfluss im Wechselgetriebe (4) wieder geschlossen wird.

12. Verfahren nach einem der Ansprüche 1 bis 10, **dadurch gekennzeichnet, dass** die formschlüssige Schalteinrichtung (7) des Wendesatzes (8) keine Neutralstellung aufweist und der Kraftfluss im Wechselgetriebe (4) dauernd beim Segel oder Abschleppbetrieb unterbrochen bleibt.

13. Verfahren nach einem der vorgenannten Ansprüche, **dadurch gekennzeichnet, dass** beim Umschalten des Wendesatzes (8) von einer Vorwärtsfahrtrichtung auf eine Rückwärtsfahrtrichtung der Kraftfluss im Wechselgetriebe (4) durch das Öffnen einer Kupplung unterbrochen wird.

14. Antriebsanordnung (1) für ein Fahrzeug mit zwei gleichwertigen Fahrtrichtungen, umfassend ein Wechselgetriebe (4) zur Realisierung verschiedener Übersetzungen und einen Wendesatz (8) zur Drehrichtungsumkehr, wobei das Wechselgetriebe (4) mehrere Planetenradsätze (5) und mehrere Lastschaltelemente (6) umfasst, und wobei der Wendesatz (8) mindestens eine formschlüssige Schalteinrichtung (7) umfasst, **gekennzeichnet durch** eine Steuereinrichtung (11), die dazu eingerichtet ist ein Verfahren nach einem der vorgenannten Ansprüche zu steuern.

15. Computerprogrammprodukt umfassend Befehle, die bewirken, dass die Steuereinrichtung (11) nach Anspruch 14 die Verfahrensschritte des Verfahrens nach einem der Ansprüche 1 bis 13 ausführt.

## Claims

1. Method for operating a drive assembly (1) of a vehicle having two equivalent directions of travel in coasting or towing operation, wherein the drive assembly (1) has a variable-speed transmission (4) for implementing various transmission ratios and a reversing set (8) for reversing the direction of rotation, wherein the variable-speed transmission (4) comprises a plurality of planetary gear sets (5) and a plurality of load-switching elements (6), and wherein the reversing set (8) comprises at least one positively-locking switching device (7), **characterized in that** in order to activate the coasting or towing operation, at least one load-switching element (6) in the variable-speed transmission (4) is opened.

2. Method according to Claim 1, **characterized in that** the coasting operation is activated automatically by a control device (11) when a desired speed of travel has been reached.

3. Method according to Claim 1 or 2, **characterized in that** the variable-speed transmission (4) comprises three planetary gear sets (5), and **in that** in order to activate the coasting or towing operation, exactly two load-switching elements (6) in the variable-speed transmission (4) are opened.

4. Method according to one of the preceding claims, **characterized in that** in order to deactivate a coasting or towing operation, at least one load-switching element (6) in the variable-speed transmission (4) is closed.

5. Method according to Claim 4, **characterized in that**, depending on the current speed of travel, suitable load-switching elements (6) are selected and closed.

6. Method according to Claim 4 or 5, **characterized in that** when the selected load-switching elements (6) are closed, a drive motor (13) of the drive assembly (1) is dragged to a target rotational speed.

7. Method according to Claim 4 or 5, **characterized in that** before the selected load switching elements (6) are closed, a drive motor (13) of the drive assembly (1) is accelerated to a synchronized rotational speed.

8. Method according to one of the preceding claims, **characterized in that** the positively-locking switching device (7) is not actuated in order to activate or to deactivate the coasting or towing operation.

9. Method according to one of the aforementioned claims, **characterized in that** when the coasting or towing operation is activated, a secondary pump (12) for the oil supply, at least of the variable-speed transmission (4), is activated or started up.

10. Method according to one of the preceding claims, **characterized in that** the lubricant level (9) in the variable-speed transmission (4) is raised during coasting or towing operation.

11. Method according to one of the preceding claims, **characterized in that** firstly, the force flow in the variable-speed transmission (4) is interrupted by at least one load-switching element (6) being opened and then the positively-locking switching device (7) of the reversing set (8) being switched into a neutral position, and then the force flow in the variable-speed transmission (4) is closed again.

12. Method according to one of Claims 1 to 10, **characterized in that** the positively-locking switching device (7) of the reversing set (8) has no neutral position, and the force flow in the variable-speed transmission (4) remains permanently interrupted during coasting or towing operation.

13. Method according to one of the preceding claims, **characterized in that** when the reversing set (8) is switched over from a forward direction of travel to a reverse direction of travel, the force flow in the variable-speed transmission (4) is interrupted by the disengagement of a clutch.

14. Drive assembly (1) for a vehicle having two equivalent directions of travel, comprising a variable-speed transmission (4) for implementing various transmission ratios and a reversing set (8) for reversing the direction of rotation, wherein the variable speed transmission (4) comprises a plurality of planetary gear sets (5) and a plurality of load-switching elements (6), and wherein the reversing set (8) comprises at least one positively-locking switching device (7), **characterized by** a control device (11), which is set up to control a method according to one of the preceding claims.

15. Computer program product comprising commands which have the effect that the control device (11) according to Claim 14 executes the method steps of the method according to one of Claims 1 to 13.

## Revendications

1. Procédé d'exploitation d'un agencement d'entraînement (1) d'un véhicule ayant deux directions de marche équivalentes dans un mode de navigation ou de remorquage, l'agencement d'entraînement (1) présentant une boîte de vitesses (4) pour réaliser différents rapports de transmission et un ensemble d'inversion (8) pour inverser la direction de rotation, la boîte de vitesses (4) comprenant plusieurs trains planétaires (5) et plusieurs éléments de commutation de charge (6), et l'ensemble d'inversion (8) comprenant au moins un dispositif de commutation à complémentarité de forme (7), **caractérisé en ce que** pour activer le mode de navigation ou de remorquage, au moins un élément de commutation de charge (6) est ouvert dans la boîte de vitesses (4).

2. Procédé selon la revendication 1, **caractérisé en ce que** le mode de navigation est activé automatiquement par un dispositif de commande (11) lorsqu'une vitesse de marche souhaitée est atteinte.

3. Procédé selon la revendication 1 ou 2, **caractérisé en ce que** la boîte de vitesses (4) comprend trois trains planétaires (5), et **en ce que** pour activer le mode de navigation ou de remorquage, exactement deux éléments de commutation de charge (6) sont ouverts dans la boîte de vitesses (4).

4. Procédé selon l'une quelconque des revendications précédentes, **caractérisé en ce que** pour désactiver un mode de navigation ou de remorquage, au moins un élément de commutation de charge (6) est fermé dans la boîte de vitesses (4).

5. Procédé selon la revendication 4, **caractérisé en ce que** des éléments de commutation de charge (6) appropriés sont sélectionnés et fermés en fonction de la vitesse de marche actuelle.

6. Procédé selon la revendication 4 ou 5, **caractérisé en ce que** lors de la fermeture des éléments de commutation de charge sélectionnés (6), un moteur d'entraînement (13) de l'agencement d'entraînement (1) est tracté à une vitesse de rotation cible.

7. Procédé selon la revendication 4 ou 5, **caractérisé en ce qu'**avant la fermeture des éléments de commutation de charge sélectionnés (6), un moteur d'entraînement (13) de l'agencement d'entraînement (1) est accéléré à une vitesse de rotation synchrone.

8. Procédé selon l'une quelconque des revendications précédentes, **caractérisé en ce que** le dispositif de commutation à complémentarité de forme (7) n'est pas actionné pour activer ou désactiver le mode de navigation ou de remorquage.

9. Procédé selon l'une quelconque des revendications précédentes, **caractérisé en ce que**, lors de l'activation du mode de navigation ou de remorquage, une pompe secondaire (12) est activée ou mise en service pour alimenter en huile au moins la boîte de vitesses (4).

10. Procédé selon l'une quelconque des revendications précédentes, **caractérisé en ce que** le niveau de lubrifiant (9) est augmenté dans la boîte de vitesses (4) dans le mode de navigation ou de remorquage.

11. Procédé selon l'une quelconque des revendications précédentes, **caractérisé en ce que** le flux de force dans la boîte de vitesses (4) est d'abord interrompu en ouvrant au moins un élément de commutation de charge (6) et en commutant ensuite le dispositif de commutation à complémentarité de forme (7) de l'ensemble d'inversion (8) dans une position neutre, puis le flux de force dans la boîte de vitesses (4) est de nouveau fermé.

12. Procédé selon l'une quelconque des revendications 1 à 10, **caractérisé en ce que** le dispositif de commutation à complémentarité de forme (7) de l'ensemble d'inversion (8) ne présente pas de position neutre et le flux de force dans la boîte de vitesse (4) reste interrompu en permanence dans le mode de navigation ou de remorquage.

13. Procédé selon l'une quelconque des revendications précédentes, **caractérisé en ce que**, lors de la commutation de l'ensemble d'inversion (8) d'une direction de marche avant à une direction de marche arrière, le flux de force dans la boîte de vitesses (4) est interrompu par l'ouverture d'un embrayage.

14. Agencement d'entraînement (1) pour un véhicule ayant deux directions de marche équivalentes, comprenant une boîte de vitesses (4) pour réaliser différents rapports de transmission et un ensemble d'inversion (8) pour inverser la direction de rotation, la boîte de vitesses (4) comprenant plusieurs trains planétaires (5) et plusieurs éléments de commutation de charge (6), et l'ensemble d'inversion (8) comprenant au moins un dispositif de commutation à complémentarité de forme (7), **caractérisé par** un dispositif de commande (11) qui est adapté pour commander un procédé selon l'une quelconque des revendications précédentes.

15. Produit de programme informatique comprenant des instructions qui amènent le dispositif de commande (11) selon la revendication 14 à exécuter les étapes de procédé du procédé selon l'une quelconque des revendications 1 à 13.
